# EUROPEAN PATENT SPECIFICATION

(11) **EP 3 732 146 B1**
(45) Date of publication and mention of the grant of the patent: **27.10.2021**
(21) Application number: 18833886.7
(22) Date of filing: 21.12.2018
(51) Int. Cl.: E04C 5/00

(54) **CALCIUM SULFOALUMINATE CEMENT COMPOSITION WITH IMPROVED CORROSION RESISTANCE**
CALCIUMSULFOALUMINATZEMENTZUSAMMENSETZUNG MIT VERBESSERTER KORROSIONSBESTÄNDIGKEIT
CIMENT DE SULFOALUMINATE DE CALCIUM POSSÉDANT UNE RÉSISTANCE AMÉLIORÉE À LA CORROSION

(30) Priority: 27.12.2017 IT 201700149872
(43) Date of publication of application: 04.11.2020
(73) Proprietor: ITALCEMENTI S.p.A., 24126 Bergamo (IT)
(72) Inventor: MARCHI, Maurizio Iler, 20066 MELZO (IT); TORTELLI, Sergio, 25032 CHIARI (IT); PASTORE, Tommaso, 20011 CORBETTA (IT); LORENZI, Sergio, 24060 BAGNATICA (IT)
(74) Representative: Cattaneo, Elisabetta
(86) International application number: PCT/EP2018/086709
(87) International publication number: WO 2019/129732

(56) References cited:
- EP-A1- 2 842 924
- WO-A1-96/22951
- WO-A1-2015/086453
- WO-A2-2004/044267
- FR-A1- 2 963 002
- US-A- 4 285 733
- US-A- 4 442 021
- US-A- 5 092 923
- US-A1- 2005 235 881
- DATABASE WPI Week 200901 25 February 2008 (2008-02-25) Thomson Scientific, London, GB; AN 2009-A20890 XP002784769, -& KR 100 806 637 B1 (CHOI WON) 25 February 2008 (2008-02-25)
- SOYLEV ET AL: "Corrosion inhibitors for steel in concrete: State-of-the-art report", CONSTRUCTION AND BUILDING MATERIALS, ELSEVIER, NETHERLANDS, vol. 22, no. 4, 1 February 2008 (2008-02-01), pages 609-622, XP022450162, ISSN: 0950-0618, DOI: 10.1016/J.CONBUILDMAT.2006.10.013

## Description

### FIELD OF THE INVENTION

The present invention concerns a calcium sulfoaluminate composition for the production of steel-reinforced concrete, in which the corrosion rate of the steel reinforcement bars is reduced.

### STATE OF THE ART

Steel reinforced concrete is one of the most durable and cost effective construction materials, employed for instance in the construction of buildings, bridges or roads.

The widespread usage of reinforced concrete is due to the optimal combination of properties of its component materials, concrete and reinforcing steel bars (also referred to in the field simply as rebars), which confer it respectively compressive and tensile strength thanks to the intrinsic ductility of the metal; this cooperation of the materials is possible also thanks to the fact that they have similar coefficients of thermal expansion, thus avoiding large internal mechanical stresses upon temperatures changes.

The base of the concrete component is generally the so-called "Ordinary Portland Cement" (OPC). When hardened, this cement contains in its pores an aqueous phase that is highly alkaline, with pH values in the range of about 12.5 to 13.5, due to the presence of alkalis (KOH, NaOH) and portlandite (calcium hydroxide). Under these conditions, a passivating oxide film (essentially made of ferric oxide, Fe₂O₃) grows onto the surface of the steel bars, protecting them against corrosion.

However, with time the pH in this aqueous phase may gradually decrease, for instance due to reaction with atmospheric CO₂, destabilizing the passivating film: as a rule of thumb, steel is protected at pH above about 11 but starts to corrode at pH below about 10. Following carbonation of the cement, the rebars of reinforced concrete become prone to corrosion, in particular in case of attack from chloride ions that may penetrate the concrete coming from seawater (when the reinforced concrete is used in harbour installations, bridges and buildings near coasts) or from de-icing salts (in structures like viaducts or bridge decks). Chloride corrosion of the rebars is generally not uniform, but rather occurs according to a phenomenon known as pitting, a highly localized corrosion penetrating the passivating film and giving rise to severe corrosion in the exposed areas of the steel surface.

To avoid or at least retard this phenomenon, it is known to add to reinforced concrete chemical compounds, generally referred to as inhibitors. Inhibitors may belong to different chemical classes and work based on different mechanisms. These may be inorganic compounds (e.g., nitrites, nitrates, zinc oxide, or their mixtures) or organic compounds (e.g., amines, alkanolamines, carboxylic acids and their salts, phosphonic acids); and their effect may be based on competition with the redox reactions involved in steel corrosion (anodic inhibitors increase the electrochemical potential of the anodic reaction, while cathodic inhibitors lower the potential of the cathodic reaction, in both cases reducing the current density of the overall corrosion reaction), on the protection of the ferric oxide film on the steel surface, or on the formation of a further protecting layer on their own. Inhibitors are further divided into "mixed-in inhibitors", that is, compounds mixed with the components of concrete before its hardening; or "migrating inhibitors", spread (as such when liquid, or in the form of solutions) onto the surface of hardened concrete, and that diffuse into the pores of the material modifying the chemical environment in said pores and/or reaching the surface of the rebars.

The exact operation mechanism of most inhibitors is not completely clear, and their action is often attributed in the literature to different mechanisms or to mixed mechanisms. This is also due to the fact that most commercial products used as inhibitors are blends of different compounds, which may comprise combinations of inhibitors but also compounds with other functionalities, such as hardening retarders.

In AN2009-A20890&KR100806637B1 it is disclosed a high-strength, non-shrink mortar composition with anti-corrosion properties of steel and, more specifically, for grouting materials used for filling the construction of machine foundations, bridge pillars and various steel structures.

The most widely used inhibitor in OPC is calcium nitrite, Ca(NO₂)₂, alone or in combination with other inhibitors. Calcium nitrite is an anodic inhibitor, acting by increasing the corrosion potential of steel reducing its dissolution and aiding the formation of a stable passive layer even in the presence of chloride ions, and is the only inhibitor that has been shown to prevent chloride corrosion (see, e.g., "Effects of cathodic prevention on the chloride threshold for steel corrosion in concrete", L. Bertolini et al, Electrochimica Acta, vol. 54, (5), 2009, pages 1452-1463). All investigations reported in the literature revealed a critical molar concentration ratio (threshold value) between the nitrite and chloride ions of about 0.6 (with some variation from 0.5 to 1) in order to prevent the onset of corrosion.

Despite being maybe the most thoroughly studied inhibitor, its protection mechanism has not yet completely established, as reported in paragraph 3.3.2 of the review article "Corrosion inhibitors for steel in concrete: State-of-the-art report", T.A. Söylev et al, Construction and Building Materials, vol. 22, (4), 2008, pages 609-622. In particular, it is not known whether calcium nitrite only acts in preventing and retarding pitting corrosion, but it is ineffective once corrosion has started; or else, if it is also effective in repairing the passivating film.

What is clear in OPC is however that calcium nitrite may protect the passivating film present on the steel rebars, but it plays only a marginal role in producing such film when a sufficient alkalinity is provided in the aqueous environment around the bars, such as the case of OPC concretes.

In recent years, other cement compositions are gaining commercial interest. One of these is calcium sulfoaluminate (CSA) cements which, although more expensive, offer several advantages over OPC.

A first advantage of CSA cements is that the produced concrete often achieves in 24 hours the compressive strengths that OPC reaches after 28 days strength in 24 hours. Rapid strength gain is critical for instance in situations where an airport runway, a bridge repair or a damaged freeway must be returned to service in a very short amount of time.

Another important advantage is the significantly lower carbon footprint of CSA compared to OPC. In their production, OPC is fired in kilns at temperatures of around 1500 °C, whereas CSA only needs to be fired at temperatures of around 1250 °C. For every 1000 kg of OPC produced from limestone a resulting 579 kg of CO₂ gas is emitted solely from the chemical reaction, regardless of the process used or the fuel efficiency; in contrast, producing 1000 kg of CSA results in only 216 kg of CO₂, a reduction of about 62% relative to OPC.

CSA cements are intrinsically less alkaline materials than OPC. The main mineral components in CSA cement are anhydrous calcium sulfoaluminate (4CaO·3Al₂O₃·CaSO₄), dicalcium silicate (2CaO·SiO₂) and gypsum (CaSO₄·2H₂O). Calcium oxide in CSA cement is bonded and not free so its alkali is lower.

For this reason, a ferric oxide protecting film does not grow spontaneously on steel rebars after production of CSA reinforced concrete, as verified by experiments. Also attempts to rise the pH of CSA by addition of Ca(OH)₂ have proven ineffective (no benefits observed in steel passivation). As discussed above, calcium nitrite is instead not necessary in producing such film in OPC based reinforced concrete.

It is an object of the present invention to provide a calcium sulfoaluminate cement composition for the production of steel-reinforced concrete, in which the corrosion rate of the steel reinforcement bars is reduced.

### SUMMARY OF THE INVENTION

The object above is achieved according to the present invention with a composition for the production of calcium sulfoaluminate (CSA) steel-reinforced concrete, comprising a calcium sulfoaluminate cement and a passivating salt selected from a nitrite of an alkali or alkaline-earth metal, a nitrate of an alkali or alkaline-earth metal and mixtures thereof, wherein the molar concentration of the anion of the passivating salt is in the range from 15 to 500 mol per 1 cubic meter (m³) of concrete.

In the present invention the molar concentration of the anions of the passivating salt of the composition for the production of CSA steel-reinforced concrete is expressed in relation to 1 m³ of final concrete. This kind of unity measure is usual in the field.

In another aspect, the invention concerns a steel-reinforced concrete obtainable by using the composition according to the invention.

In a still further aspect the invention concerns the use a passivating salt for the inhibition of the corrosion of CSA-based steel-reinforced concrete, wherein -the passivating salt is selected from a nitrite of an alkali or alkaline-earth metal, a nitrate of an alkali or alkaline-earth metal and mixtures thereof, and
- the molar concentration of the anion of the passivating salt is in the range from 15 to 500 mol per 1 cubic meter (m3) of concrete.

Advantageously, the use of the passivating salt of the invention allows to create the conditions where the steel bar passivation occurs, almost immediately in the first stages after setting.

### BRIEF DESCRIPTION OF THE FIGURES

Fig. 1 shows the formworks used for the corrosion tests;
Fig. 2 shows the free corrosion potential of steel bars in six CSA compositions of the invention as a function of calcium nitrite content, and of a comparison sample containing no calcium nitrite;
Figs. 3a and 3b show the trend of the free corrosion potential as a function of time of steel bars in CSA and OPC concrete specimens;
Fig. 4 shows the trend of the free corrosion potential as a function of time of steel bars in a sample of the invention and, as a comparison, in a sample of CSA with no calcium nitrite addition and in two CSA samples added with different amounts of an alkaline compound;
Figs. 5-9 report measures of electrochemical impedance spectroscopy carried out on one sample according to the invention and four comparison samples.

### DETAILED DESCRIPTION OF THE INVENTION

Therefore, the invention concerns the production of calcium sulfoaluminate (CSA) steel-reinforced concrete, comprising a calcium sulfoaluminate cement and a passivating salt selected from a nitrite of an alkali or alkaline-earth metal, a nitrate of an alkali or alkaline-earth metal and mixtures thereof, wherein the molar concentration of the anion of the passivating salt is in the range from 15 to 500 mol per 1 cubic meter (m3) of concrete.

Unless otherwise specified, in the present invention:
- all percentages and ratios among components are by weight;
- "b.w." stands for "by weight";
- "w/c" stands for water/cement ratio; and
- the collective term "a passivating salt" will be adopted to mean nitrite or nitrate salts of alkali or alkaline-earth metals or their mixtures;
- with the term "calcium sulfoaluminate cement" or "CSA cement", it is intended to comprise CSA cement, which comprises by turn CSA clinker;
- with the term "concrete", it is intended to comprise calcium sulphoaluminate (CSA) cement, and optional cements.

Briefly, the invention refers to a method for improving the resistance of steel bars reinforcement embedded in CSA-based concretes guaranteeing the formation of the passivation film formation in spite of the low alkalinity.

The inventors have observed that, surprisingly in view of the general knowledge about the role of calcium nitrite in OPC, the addition of calcium nitrite in calcium sulfoaluminate cement is effective in creating, since the very early stages, the passivating film on the rebars present in the concrete, even in absence of an alkalinity level suitable to achieve the passive conditions. A similar effect is not observed when calcium nitrite is added to OPC, where passivation only occurs as usual when the suitable alkalinity level is achieved.

The molar concentration of the anion of the passivating salt according to the invention is in the range from 15 to 500 mol per 1 cubic meter (m³) of concrete.

Preferably, the molar concentration of the anion of the passivating salt according to the invention is in the range from 25 to 350 mol, more preferably 30 to 250 per 1 cubic meter (m³) of concrete.

When the anion of the passivating salt is a nitrite, it is in the range from 15 to 500 mol, preferably, 25 to 350 mol, more preferably 30 to 250 per 1 cubic meter (m3) of concrete.

When the anion of the passivating salt is a nitrate, it is preferably in the range from 30 to 400 mol, more preferably, 50 to 300 mol, still more preferably 70 to 250 per 1 cubic meter (m3) of concrete.

When the passivating salt is a mixture of a nitrite and a nitrate, the molar ratio between the mol amount of anion nitrite and the mol amount of anion nitrate is in the range from 65 to 1.0. Preferably the molar ratio between the mol amount of anion nitrite and the mol amount of anion nitrate is in the range from 40 to 10

In an advantageous embodiment of the invention the passivating salt is calcium nitrite or calcium nitrate or a mixture thereof.

Preferably, the concrete of the present invention is intended as concrete comprising, in the mix design, calcium sulphoaluminate (CSA), clinker and cements.

CSA cements, comprising also clinker are a family of products characterized by the presence in their compositions of ye'elimite phase (or Kline's salt) with a general formula M₄Me₃SO₄ (with M = Ca, Na, Mg, K; Me = Al, Fe, Ti).

The CSA cements included in the present invention have been widely described both in the literature (ref. Odler, Taylor & Francis, 23 mar 2000 - pag. 71) and in patents (e.g., EP 1781579 B1). They are characterized by the presence of ye'elimite phase in different amounts (from 5-75% b.w.) and can present both high early or normal hardening strengths; they are usually characterized by a pH that is lower than 12.5 in the first hours/days of hydration. The CSA cement used in the present invention has a minimum content of ye'elimite of 45% b.w. of the total amount of CSA-cement.

Concretes containing CSA cement in the invention are prepared adopting the common state of the art methods and equipment, by mixing the clinker or cement or their blended mixtures, a filler, aggregates with variable size (below 32 mm) according to EN12620 and enough water for obtaining a proper initial workability (from class SO to S5 as described in EN 206). In the concrete mix design, admixtures of different types (rheology modifiers, water reduction admixtures, retarding agents, accelerating agents, air entraining agents) can be included, in order to reach the desired performance at both fresh and hardened state.

In the concretes of the invention citric acid and/or tartaric acid may be present as retarding agents, lithium carbonate and/or sodium carbonate as accelerating agent and polycarboxilate-based polymers as water reducing agents, with a total percentage preferably from 0.1 to 2% b.w. with respect to the amount of CSA cement, preferably the total amount of these additives is between 0.2 and 1.5%, and more preferably between 0.5 and 1.0% b.w., with respect to the amount of CSA cement.

The amount of CSA cement in the mix design of the concrete can vary from 20 Kg to 800 Kg with respect to 1 m³ of final concrete according to its use as unique binder in the mix design or in mixture with other cements or hydraulic materials, according to EN197-1, EN 413-1, EN13282-1, EN13282-2, EN459-1 or additions, such as fly ash, slag or pozzolanic materials as defined in EN 197-1 or in EN15167-1 and EN 450-1; preferably the amount of CSA clinker and cement is between 75-600 Kg/m³ and more preferably from 100-500 Kg/m³. The amount of water in the composition for the production of concrete can vary to have a water/cement ratio from 0.20 - 0.80, preferably 0.35 - 0.65 and more preferably 0.45-0.55, according to the absence/presence of admixtures and performance at fresh and hardened state.

In the preparation of the concrete, in addition to the ingredients of the composition described above, a suitable amount of passivating salts is added in powder, which is not according to the invention, but only disclosed herein, or as aqueous solution, which is according to the invention, with variable concentration, in order to have the minimum nitrite and/or nitrate moles per m³ of final concrete as per claim 1 for permitting the formation of the steel bar passivation film.

In the case of a calcium nitrite aqueous solution at 30%, the minimum amount of the calcium nitrite solution corresponds to 5 L/m³ with respect to the final concrete. The solution can hence be preferably added to the mix design in an amount from 5 to 30 L/m³.

In another aspect therefore the invention relates to a method for the production of a CSA-based steel-reinforced concrete, wherein a passivating salt selected from a nitrite of an alkali or alkaline-earth metal, a nitrate of an alkali or alkaline-earth metal and mixtures thereof is used, being said passivating salt employed in the form of an aqueous solution in an amount between 5 and 30 L per m3 of final concrete, and wherein the concentration of the anion of said passivating agent is in the range from 15 to 500 mol per 1 cubic meter of concrete.

The invention will be further illustrated by the following experimental section.

### Methods and instruments

Mixed metal oxide (MMO) activated titanium was used to manufacture pH sensitive probes and reference electrodes, in particular Ruthenium and Iridium (RuOₓ-IrOₓ).

Multi electrode probes (MEP) were manufactured by using a RuOx-IrOx net with thickness 0.3 mm and width 1.10 mm. A piece of length 35 mm was cut from the net and washed in acetone with ultrasound cleaner for about two minutes. The probe was made of 10 MMO titanium segments connected to a D PCB male connector with 15 pins. The electrical multi-clip was inserted in a Plexiglas housing filled with resin in order to guarantee water sealing.

Reference Mortar Electrode (RME) were also designed and manufactured by using RuOx-IrOx net segments embedded in alkaline OPC mortar with a housing made a Plexiglas pipe (22 mm diameter, 2 mm thickness, and 100 mm length). Portland cement mortar (CEM II/A 42.5R-LL) with w/c ratio of 0.47 and a sand/cement ratio of 0.8 was considered.

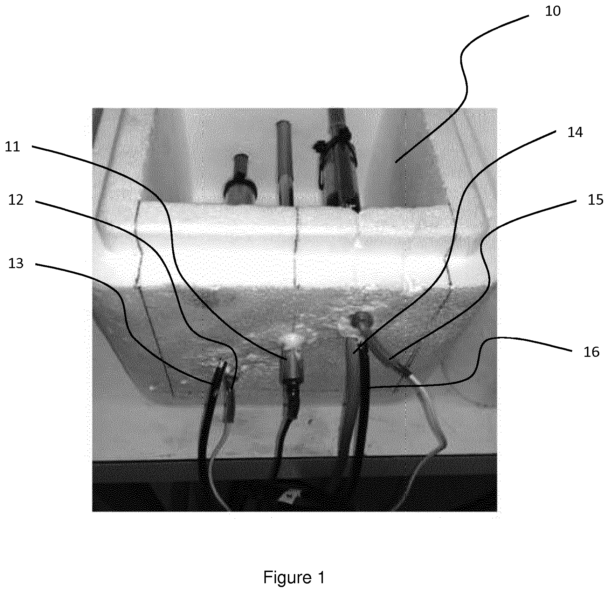

Carbon steel bar was used as working electrode for corrosion tests in concrete. Corrosion tests were performed in formworks designed according to Figure 1; the formwork is made of a polystyrene box open in its upper part (10); in the box are fixed, with leak-proof sealing, a carbon steel working electrode (11), two AISI 304 stainless steel counter electrodes (12 and 15) for Electrical Impedance Spectroscopy (EIS) tests, and RME (14). MEP probes (13 and 16) were also positioned into the formwork during the first series of concrete tests. For the other series, MEP probe was substituted by single Ti-MMO wire embedded into concrete.

For the CSA concrete specimen, potential measurements were scheduled immediately after the casting during the first 2 hours.

For the first two weeks, the OPC and CSA specimens were stored in a controlled room with 20 °C and 50% relative humidity. Daily measurements were performed. They were then placed at 95% relative humidity and 20 °C. EIS tests on CSA with and without Ca(OH)₂, CSA with Ca(NO₂)₂ and OPC specimen with w/c ratio of 0.5 were carried out immediately after pouring to preliminary assess passivation kinetics. EIS tests in the frequency range 40 kHz to 5 or 1 mHz using a signal amplitude of 10 mV were carried out. The working electrode has an exposed area of 0.0016 m².

Phenolphthalein is the well-recognized pH indicator to assess concrete carbonation depth. It turns pink in solution with pH included from 8.3-9 to 13 and is colorless outside this pH range.

Indigo carmine is more suitable to asses steel passivation due to its color variation in the range between 11.4 and 13. Generally, indigo carmine is dissolved in water and its maximum solubility is about 10 g/L. However, a water solution is not suitable to assess the pH of pore solution due to dilution. The indicator was then modified by mixing a water/indigo solution with acetone, which promptly evaporates once sprayed on concrete specimens.

### EXAMPLE 1

This example is directed to studying the effect of the amount of calcium nitrite on the corrosion properties of steel reinforced concretes of the invention.

It has been prepared a first series of seven specimens of cement pastes with w/c ratio equal to 0.5 at different calcium nitrite content. The base material, i.tech ALI CEM GREEN, is a CSA cement produced and sold by the present Applicant; the filler is a limestone filler coming from Cremaschi quarry; the water reducing NOWA 130 agent is a liquid super-fluidifying additive based on non-sulfonate polyacrylic acid.

The concrete mix design is reported in Table 1a.

**Table 1a**

| **Material** | **Dosage (Kg/m³)** |
|---|---|
| CSA cement (i.tech ALI CEM GREEN) | 300 |
| Sand 0-1 mm | 464 |
| Sand 1-4 mm | 746 |
| Gravel 4-10 mm | 612 |
| Filler | 96 |
| Water reducing agent (NOWA 130) | 2.1 |
| Retarding agent (Citric acid) | 0.9 |
| Water | 150 |
| w/c ratio | 0.50 |

To the mix design, different amounts of calcium nitrite have been added for preparing seven specimens; the calcium nitrite dosage has been measured as liters of a 30% b.w. aqueous solution of calcium nitrite (DCI® by W.R.Grace & Co.-Conn.) per m³ of final concrete, according to Table 1b below:

**Table 1b**

| **Specimen** | **Ca(NO₂)₂₋ 30% sol (l/m³)** | **NO2-mol/m³** |
|---|---|---|
| 1*(control) | 0 | 0 |
| 2 | 2 | 12 |
| 3 | 3 | 18 |
| 4 | 5 | 30 |
| 5 | 7.5 | 44 |
| 6 | 15 | 89 |
| 7 | 30 | 177 |

After the mixing, the concretes have been poured in plastic moulds containing the steel-bars prepared as shown in the experimental session.

The free corrosion potential of specimens 1-7 was measured at 180 hours after pouring. The corrosion potential was measured vs. a saturated calomel electrode (SCE), according to the method described in the section "Methods and Instruments".

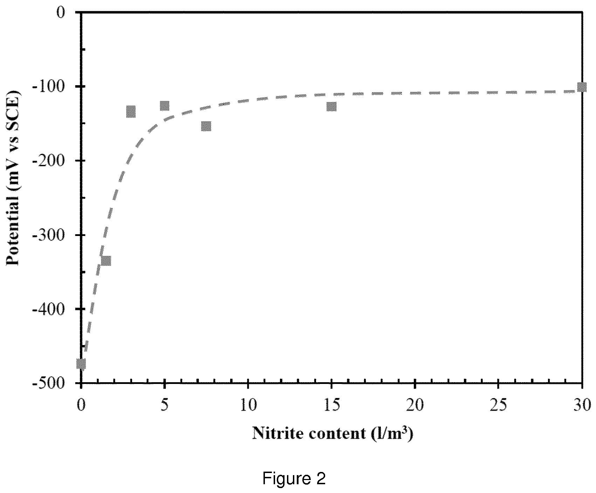

The results of the tests are represented graphically in Fig. 2: as can be seen from the graph in the Figure, calcium nitrite causes an increase in the free corrosion potential of rebars for additions of the inhibitor up to 5 L/m³, value at which the free corrosion potentials typical of passive reinforcements are achieved, while for values in excess of 5 L/m³ the free corrosion potential is essentially independent from the amount of calcium nitrite.

### EXAMPLE 2

This example is directed to studying the effect of the addition of calcium nitrite on the corrosion properties of a steel reinforced concrete of the invention and of comparison steel reinforced concretes.

A second series of specimens of steel reinforced concrete has been prepared following the procedure described in Example 1, but varying the concrete mix designs in order to obtain comparable characteristic strengths. Specifically, the compositions were as follows:
- specimen 8: CSA concrete with addition of 30 L/m³ calcium nitrite (same as specimen 7 in Example 1); composition of the invention;
- specimen 9: CSA concrete with no calcium nitrite addition (same as specimen 1 in Example 1); comparison composition;
- specimen 10: OPC concrete using a cement type II/A-LL 42.5R according to EN197-1 with a dosage of 400 Kg/m³ and a w/c = 0.5 with no calcium nitrite addition; the aggregate curve is the same as described in EXAMPLE 1, with reference to Fig. 2; 2.0 Kg/m³ of NOWA 130 (water reducing agent) have been also used; comparison composition;
- specimen 11: OPC concrete as specimens 10 with addition of 30 L/m³ calcium nitrite; comparison composition;
- specimen 12: CSA concrete as specimen 9 and containing 2% b.w. of cement of Ca(OH)₂; comparison composition;
- specimen 13: CSA concrete as specimen 9 and containing 4% b.w. of cement of Ca(OH)₂; comparison composition.

The free corrosion potential of specimens 8-13 was measured as a function of time according to the method described in the section "Methods and Instruments".

In a first comparison test, the corrosion potential (vs. SCE) of the rebar embedded in specimen 8 (of the invention) was compared to the same parameter of rebars embedded in comparative samples 9-11 and the results were reported in the below commented figures.

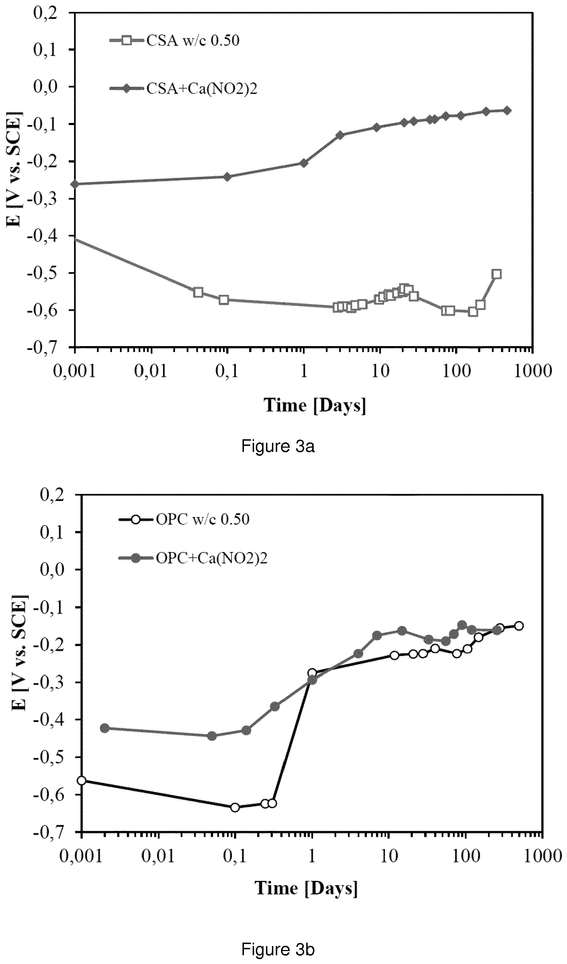

Figure 3a reports the free corrosion potential results in CSA-based concretes.

The corrosion potential of the rebar in specimen 9 was in the range of about - 500÷-400 mV vs. SCE just after pouring, with a further decrease to -600 mV vs. SCE after one day. Then, stable potentials of about -500 mV vs. SCE were reached. The addition of commercial calcium nitrite inhibitor in specimen 8, completely changed the corrosion behaviour: the rebar in this case had a free corrosion potential in the range -300÷-200 mV vs. SCE after pouring, which rapidly increased above -200 mV vs. SCE after 1 day and finally reached values of about -100 mV vs. SCE and higher in about one month.

Fig. 3b shows the behaviour of OPC-based specimens. Just after concrete pouring, the free corrosion potential of OPCs decreased significantly, meaning that carbon steel was initially behaving as an active material. Then, it increased after cement setting and rapidly reached stable values of about -200 mV vs. SCE, meaning that a passive film formed due to alkalinity of pore solution. The addition of commercial calcium nitrite inhibitor promotes only partially nobler potentials since first hours after pouring, but all specimens reach the passivation and the same corrosion potentials after one day.

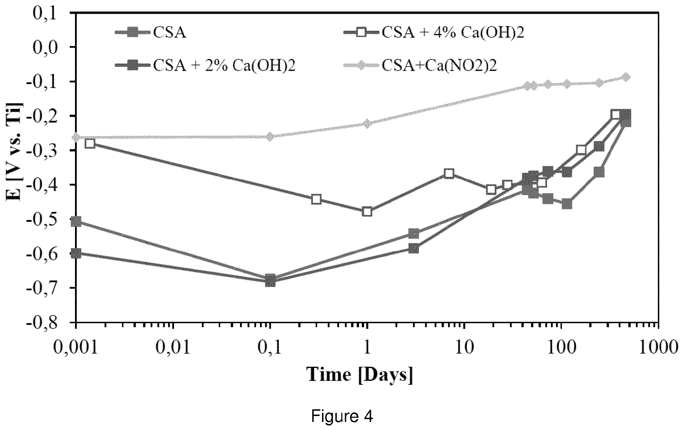

In a second comparison test, the corrosion potential of the rebar embedded in specimen 8 (of the invention) was compared to the same parameter of rebars embedded in comparative samples 9, 12 and 13. The results of the tests were represented in graphical form. Figure 4 reports hence the free corrosion potential in CSA-based concretes. The corrosion potential of the rebar in specimen 8 (of the invention) had an initial value in the range of about -300÷-200 mV vs. Ti, which steadily increased with time reaching values around -100 mV vs. Ti after a few months. Specimens 9, 12 and 13, to the contrary, had an initial decrease (in a time span ranging between 0.1 and 1 day), then an increase in free corrosion potential, reaching at the end of the test values around -200 mV vs. Ti.

The comparison of measures reported in Figs. 3a and 3b confirmed that the corrosion behaviour of rebars in OPCs was independent from the presence of calcium nitrite, while it is dependent from the presence of the inhibitor in CSA based concretes; accordingly, the knowledge about the properties of calcium nitrite in OPCs would have not suggested the use of this compound alone in CSA.

The comparison of measures reported in Fig. 4 confirmed that calcium nitrite significantly improved the corrosion behaviour of rebars in CSA based concrete, independent from the pH of the system (concentration of Ca(OH)₂).

### EXAMPLE 3

This example is directed to studying the effect of the addition of calcium nitrite on the corrosion properties of a steel reinforced concrete of the invention and of comparison steel reinforced concretes by means of electrochemical impedance spectroscopy (EIS).

Five specimens were prepared corresponding to specimens 8-12 in Example 2.

Bode spectra for modulus of impedance (Z) and phase angle were measured with the method described in the section "Methods and Instruments".

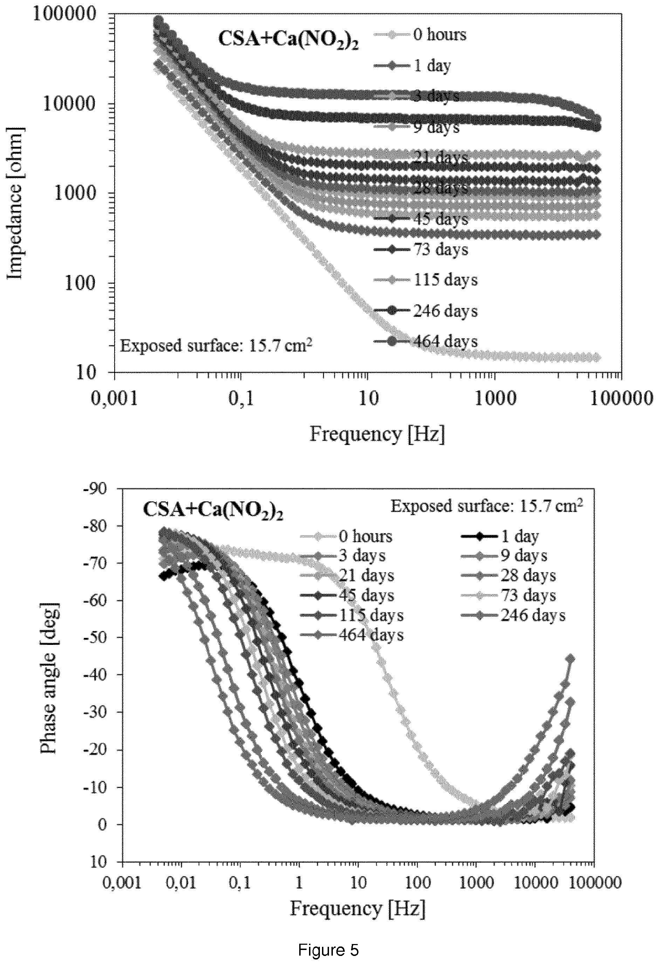

The results of these tests were reported in graphical form in Figures 5-9.

In each Figure, the upper part reports the trend of Z (measured in Ohm, Ω), and the lower part the phase angle (°), as a function of the frequency of alternate current (in Hertz, Hz). The correspondence specimen-Figure is as follows:
Fig. 5: specimen 8 (invention);

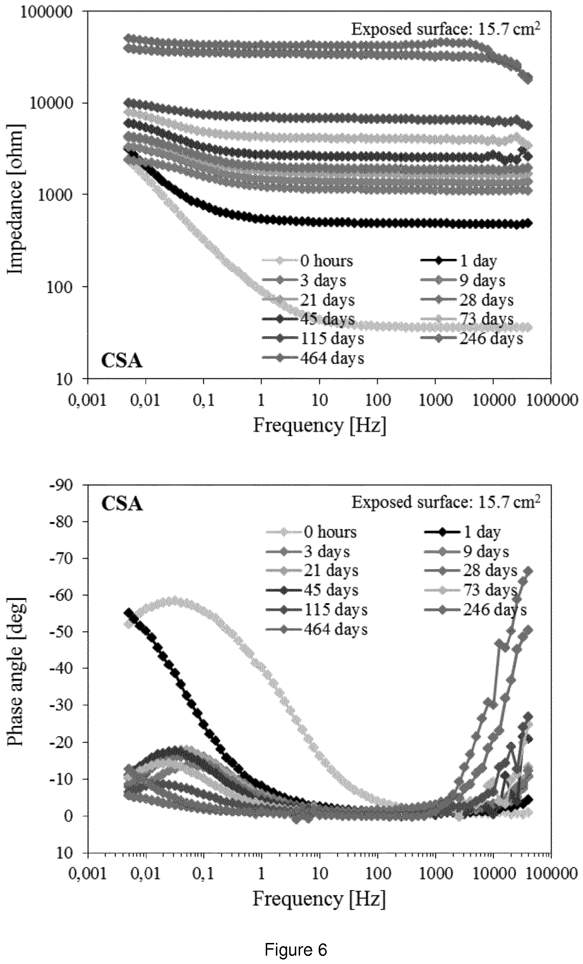

Fig. 6: specimen 9 (comparison);

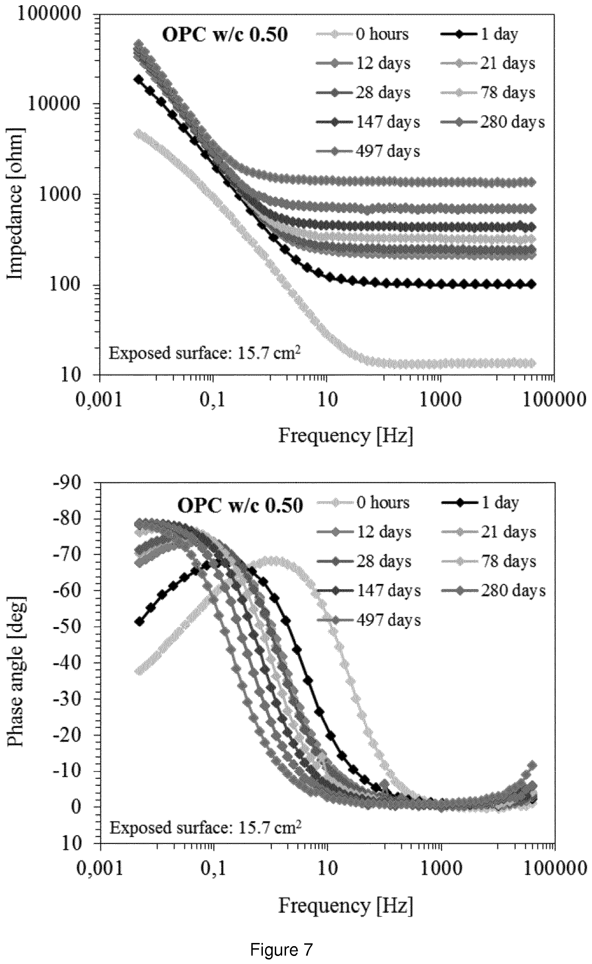

Fig. 7: specimen 10 (comparison);

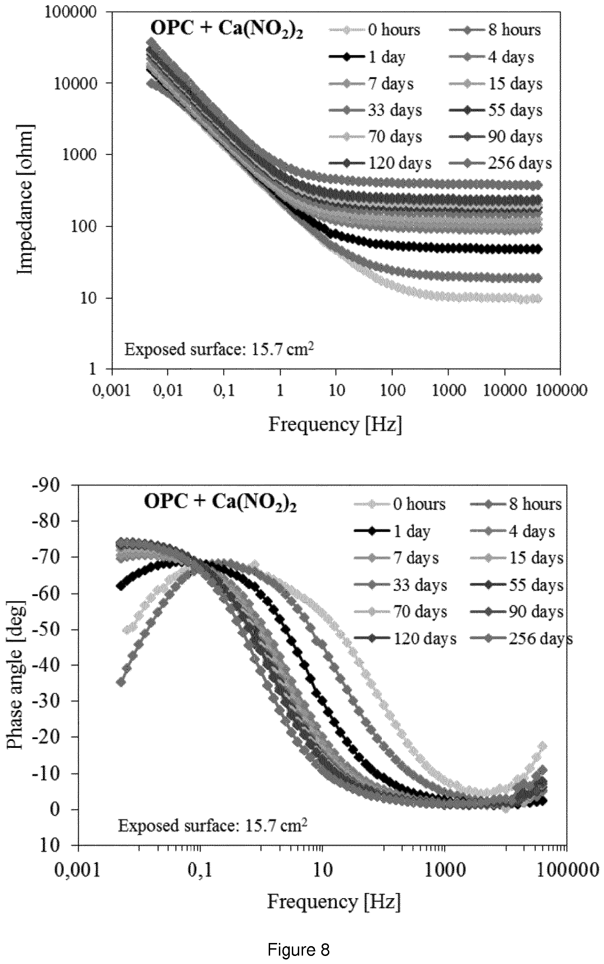

Fig. 8: specimen 11 (comparison);

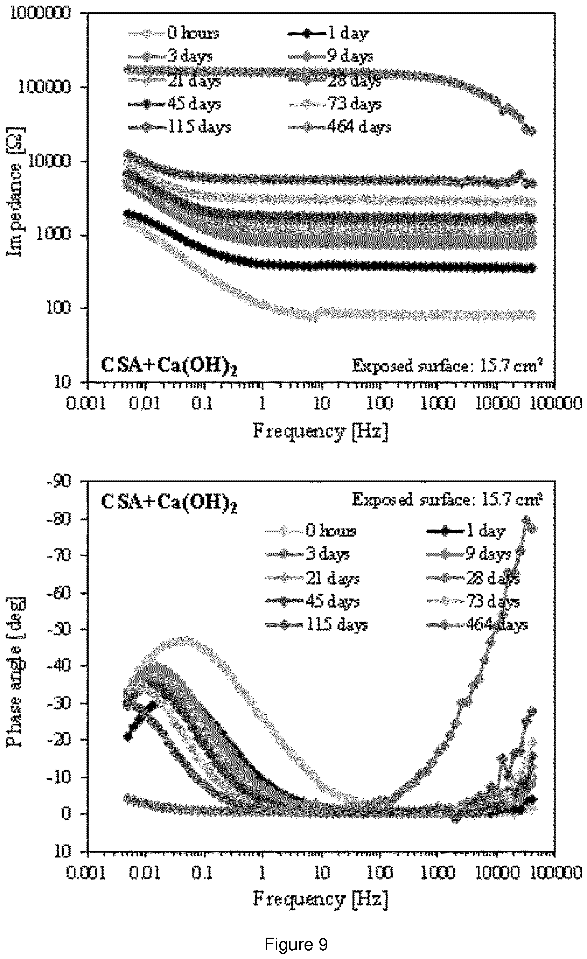

Fig. 9: specimen 12 (comparison).

EIS data confirm that different passive film were formed in CSA concrete compared to OPC due to the presence of nitrites. Low impedance at low frequencies was noticed for CSA concretes meaning that active corrosion occurs (Fig. 6). The same trend was observed when Ca(OH)₂ was added with the aim of increasing the pH (Fig. 9). The addition of calcium nitrite caused a sharp increase in the impedance modulus at low frequency since early exposures, meaning that the inhibitor was able to promote the passive film formation. This behaviour turned to be similar as that of OPC, where the passive film naturally formed due to the high level of alkalinity - and the addition of calcium nitrite did not significantly modify the passivation kinetics and type (compare Figures 7 and 8).

## Claims

1. A composition for the production of calcium sulfoalum inate (CSA) steel-reinforced concrete, comprising a calcium sulfoaluminate cement and a passivating salt selected from a nitrite of an alkali or alkaline-earth metal, a nitrate of an alkali or alkaline-earth metal and mixtures thereof, wherein the molar concentration of the anion of the passivating salt is in the range from 15 to 500 mol per 1 cubic meter (m³) of concrete.

2. The composition for the production of calcium sulfoaluminate (CSA) steel-reinforced concrete according to claim 1, wherein the molar concentration of the anion of the passivating salt is in the range from 25 to 350 mol, preferably 30 to 250 per 1 cubic meter (m³) of concrete.

3. The composition for the production of calcium sulfoaluminate (CSA) steel-reinforced concrete according to claim 1 or claim 2, wherein when the anion of the passivating salt is a nitrite, it is in the range from 15 to 500 mol, preferably, 25 to 350 mol, more preferably 30 to 250 per 1 cubic meter (m³) of concrete.

4. The composition for the production of calcium sulfoaluminate (CSA) steel-reinforced concrete according to claim 1 or claim 2, wherein when the anion of the passivating salt is a nitrate, it is in the range from 30 to 400 mol, preferably, 50 to 300 mol, more preferably 70 to 250 mol per 1 cubic meter (m³) of concrete.

5. The composition for the production of calcium sulfoaluminate (CSA) steel-reinforced concrete according to claim 1 or claim 2, wherein when the passivating salt is a mixture of a nitrite and a nitrate, the molar ratio between the mol amount of anion nitrite and the mol amount of anion nitrate is in the range from 62 to 1.9.

6. The composition for the production of calcium sulfoaluminate (CSA) steel-reinforced concrete according to claim 1 or claim 2, wherein the passivating salt is calcium nitrite or calcium nitrate or a mixture thereof.

7. The composition for the production of calcium sulfoaluminate (CSA) steel-reinforced concrete according to anyone of claims 1-6, wherein the CSA cement comprises ye'elimite phase with general formula M₄Me₃SO₄, in which is M = Ca, Na, Mg or K and Me = Al, Fe or Ti In the range of 45 to 75% b.w with respect to the total amount of CSA cement.

8. The composition for the production of calcium sulfoaluminate (CSA) steel-reinforced concrete according to anyone of claims 1-7, further comprising one or more additives selected from a rheology modifier, a water reduction admixture, a retarding agent, an accelerating agent and an air entraining agent.

9. The composition for the production of calcium sulfoaluminate (CSA) steel-reinforced concrete according to claim 8, wherein said one or more additives are present in a total amount from 0.1 to 2%, preferably from 0.2 to 1.5% b.w. still more preferaly 0.5 to 1.0% b.w. with respect to the amount of CSA cement.

10. The composition for the production of calcium sulfoaluminate (CSA) steel-reinforced concrete according to any one of claims 8 to 9, wherein said retarding agent is citric acid, tartaric acid or mixtures thereof.

11. The composition for the production of calcium sulfoaluminate (CSA) steel-reinforced concrete according to any one of claims 8-10, wherein said accelerating agent is lithium carbonate, sodium carbonate or mixtures thereof.

12. The composition for the production of calcium sulfoaluminate (CSA) steel-reinforced concrete according to any one of claims 8 to 11, wherein said water reducing agent is a polycarboxilate-based polymer.

13. The composition for the production of calcium sulfoaluminate (CSA) steel-reinforced concrete according to anyone of claims 1-12, wherein the amount of CSA cement is in the range from 20 Kg to 800 Kg, preferably 75 Kg to 600 Kg, more preferably 100 Kg and 500 Kg per cubic meter (m³) of final concrete.

14. The composition for the production of calcium sulfoaluminate (CSA) steel-reinforced concrete according to anyone of claims 1-13, further comprising water in a water/ cement weight ratio between 0.20 and 0.80, preferably 0.35 to 0.65, more preferably 0.45 to 0.55.

15. A steel-reinforced concrete obtainable by using a composition according to any one of claims 1-14.

16. A use of a passivating salt selected from a nitrite of an alkali or alkaline-earth metal, a nitrate of an alkali or alkaline-earth metal and mixtures thereof for the inhibition of corrosion of CSA-based steel-reinforced concrete.

17. A method for the production of a CSA-based steel-reinforced concrete, wherein a passivating salt selected from a nitrite of an alkali or alkaline-earth metal, a nitrate of an alkali or alkaline-earth metal and mixtures thereof is used, being said passivating salt employed in the form of an aqueous solution in an amount between 5 and 30 L per m³ of final concrete, and wherein the concentration of the anion of said passivating agent is in the range from 15 to 500 mol per 1 cubic meter of concrete.

## Patentansprüche

1. Eine Zusammensetzung zur Herstellung von stahlbewehrtem Calciumsulfoaluminat (CSA)-Beton, umfassend einen Calciumsulfoaluminatzement und ein Passivierungssalz, ausgewählt aus einem Nitrit eines Alkali- oder Erdalkalimetalls, einem Nitrat eines Alkali- oder Erdalkalimetalls und Mischungen davon, wobei die molare Konzentration des Anions des Passivierungssalzes im Bereich von 15 bis 500 Mol pro 1 Kubikmeter (m³) Beton liegt.

2. Die Zusammensetzung zur Herstellung von stahlbewehrtem Calciumsulfoaluminat (CSA)-Beton nach Anspruch 1, wobei die molare Konzentration des Anions des Passivierungssalzes im Bereich von 25 bis 350 Mol, vorzugsweise 30 bis 250 pro 1 Kubikmeter (m³) Beton liegt.

3. Die Zusammensetzung zur Herstellung von stahlbewehrtem Calciumsulfoaluminat (CSA)-Beton nach Anspruch 1 oder 2, wobei, wenn das Anion des Passivierungssalzes ein Nitrit ist, es im Bereich von 15 bis 500 Mol, vorzugsweise 25 bis 350 Mol, weiter vorzugsweise 30 bis 250 pro 1 Kubikmeter (m³) Beton liegt.

4. Die Zusammensetzung zur Herstellung von stahlbewehrtem Calciumsulfoaluminat (CSA)-Beton nach Anspruch 1 oder 2, wobei, wenn das Anion des Passivierungssalzes ein Nitrat ist, es im Bereich von 30 bis 400 Mol, vorzugsweise 50 bis 300 Mol, weiter vorzugsweise 70 bis 250 Mol pro 1 Kubikmeter (m³) Beton liegt.

5. Die Zusammensetzung zur Herstellung von stahlbewehrtem Calciumsulfoaluminat (CSA)-Beton nach Anspruch 1 oder Anspruch 2, wobei, wenn das Passivierungssalz ein Gemisch aus einem Nitrit und einem Nitrat ist, das Molverhältnis zwischen der Molmenge des Anionennitrits und der Molmenge des Anionennitrats im Bereich von 62 bis 1,9 liegt.

6. Die Zusammensetzung zur Herstellung von stahlbewehrtem Calciumsulfoaluminat (CSA)-Beton nach Anspruch 1 oder Anspruch 2, wobei das Passivierungssalz Calciumnitrit oder Calciumnitrat oder eine Mischung davon ist.

7. Die Zusammensetzung zur Herstellung von stahlbewehrtem Calciumsulfoaluminat (CSA)-Beton nach einem der Ansprüche 1 bis 6, wobei der CSA-Zement eine Ye'elimit-Phase mit der allgemeinen Formel M₄Me₃SO₄, in der M = Ca, Na, Mg oder K und Me = AI, Fe oder Ti ist, im Bereich von 45 bis 75 Gew.-%, bezogen auf die Gesamtmenge an CSA-Zement, aufweist.

8. Die Zusammensetzung zur Herstellung von stahlbewehrtem Calciumsulfoaluminat (CSA)-Beton nach einem der Ansprüche 1 bis 7, die ferner ein oder mehrere Additive enthält, die aus einem Fließeigenschaftsmodifikator, einem Wasserreduktionszusatz, einem Verzögerungsmittel, einem Beschleunigungsmittel und einem Luftporenbildner ausgewählt sind.

9. Die Zusammensetzung zur Herstellung von stahlbewehrtem Calciumsulfoaluminat (CSA)-Beton nach Anspruch 8, wobei das eine oder die mehreren Additive in einer Gesamtmenge von 0,1 bis 2 Gew.-%, vorzugsweise von 0,2 bis 1,5 Gew.-% und weiter vorzugsweise von 0,5 bis 1,0 Gew.-%, bezogen auf die Menge an CSA-Zement, vorhanden sind.

10. Die Zusammensetzung zur Herstellung von stahlbewehrtem Calciumsulfoaluminat (CSA)-Beton nach einem der Ansprüche 8 bis 9, wobei das Verzögerungsmittel Zitronensäure, Weinsäure oder Mischungen davon sind.

11. Die Zusammensetzung zur Herstellung von stahlbewehrtem Calciumsulfoaluminat (CSA)-Beton nach einem der Ansprüche 8 bis 10, wobei das Beschleunigungsmittel Lithiumcarbonat, Natriumcarbonat oder Mischungen davon sind.

12. Die Zusammensetzung zur Herstellung von stahlbewehrtem Calciumsulfoaluminat (CSA)-Beton nach einem der Ansprüche 8 bis 11, wobei das Wasserreduktionsmittel ein Polymer auf Polycarboxilatbasis ist.

13. Die Zusammensetzung für die Herstellung von stahlbewehrtem Calciumsulfoaluminat (CSA)-Beton nach einem der Ansprüche 1 bis 12, wobei die Menge an CSA-Zement im Bereich von 20 kg bis 800 kg, vorzugsweise 75 kg bis 600 kg, weiter vorzugsweise 100 kg und 500 kg pro Kubikmeter (m³) Fertigbeton liegt.

14. Die Zusammensetzung zur Herstellung von stahlbewehrtem Calciumsulfoaluminat (CSA)-Beton nach einem der Ansprüche 1 bis 13, die ferner Wasser in einem Wasser/Zement-Gewichtsverhältnis zwischen 0,20 und 0,80, vorzugsweise 0,35 bis 0,65, weiter vorzugsweise 0,45 bis 0,55, enthält.

15. Ein stahlbewehrter Beton, herstellbar unter Verwendung einer Zusammensetzung nach einem der Ansprüche 1 bis 14.

16. Eine Verwendung eines Passivierungssalzes, ausgewählt aus einem Alkali- oder Erdalkalimetallnitrit, einem Alkali- oder Erdalkalimetallnitrat und deren Mischungen, zur Korrosionshemmung von stahlbewehrtem Beton auf CSA-Basis.

17. Ein Verfahren zur Herstellung eines stahlbewehrten Betons auf CSA-Basis, bei dem ein Passivierungssalz verwendet wird, das aus einem Nitrit eines Alkali- oder Erdalkalimetalls, einem Nitrat eines Alkali- oder Erdalkalimetalls und Mischungen davon ausgewählt ist, wobei das Passivierungssalz in Form einer wässrigen Lösung in einer Menge zwischen 5 und 30 L pro m³ Fertigbeton verwendet wird und wobei die Konzentration des Anions des Passivierungsmittels im Bereich von 15 bis 500 Mol pro 1 Kubikmeter Beton liegt.

## Revendications

1. Composition pour la production de béton armé au sulfoaluminate de calcium (CSA), comprenant un ciment de sulfoaluminate de calcium et un sel de passivation sélectionné parmi un nitrite d'un métal alcalin ou alcalino-terreux, un nitrate d'un métal alcalin ou alcalino-terreux et les mélanges de ceux-ci, dans laquelle la concentration molaire de l'anion du sel de passivation est dans la plage de 15 à 500 moles pour 1 mètre cube (m³) de béton.

2. Composition pour la production de béton armé au sulfoaluminate de calcium (CSA) selon la revendication 1, dans laquelle la concentration molaire de l'anion du sel de passivation est dans la plage de 25 à 350 moles, de préférence de 30 à 250 pour 1 mètre cube (m³) de béton.

3. Composition pour la production de béton armé au sulfoaluminate de calcium (CSA) selon la revendication 1 ou la revendication 2, dans laquelle lorsque l'anion du sel de passivation est un nitrite, il est dans la plage de 15 à 500 moles, de préférence, de 25 à 350 moles, plus préférentiellement de 30 à 250 pour 1 mètre cube (m³) de béton.

4. Composition pour la production de béton armé au sulfoaluminate de calcium (CSA) selon la revendication 1 ou la revendication 2, dans laquelle lorsque l'anion du sel de passivation est un nitrate, il est dans la plage de 30 à 400 moles, de préférence, de 50 à 300 moles, plus préférentiellement de 70 à 250 moles pour 1 mètre cube (m³) de béton.

5. Composition pour la production de béton armé au sulfoaluminate de calcium (CSA) selon la revendication 1 ou la revendication 2, dans laquelle lorsque le sel de passivation est un mélange d'un nitrite et d'un nitrate, le rapport molaire entre la quantité molaire d'anion nitrite et la quantité molaire d'anion nitrate est dans la plage de 62 à 1,9.

6. Composition pour la production de béton armé au sulfoaluminate de calcium (CSA) selon la revendication 1 ou la revendication 2, dans laquelle le sel de passivation est le nitrite de calcium ou le nitrate de calcium ou un mélange de ceux-ci.

7. Composition pour la production de béton armé au sulfoaluminate de calcium (CSA) selon l'une quelconque des revendications 1 à 6, dans laquelle le ciment de CSA comprend une phase ye'elimite de formule générale M₄Me₃SO₄, dans laquelle M = Ca, Na, Mg ou K et Me = Al, Fe ou Ti dans la plage de 45 à 75 % en poids par rapport à la quantité totale de ciment de CSA.

8. Composition pour la production de béton armé au sulfoaluminate de calcium (CSA) selon l'une quelconque des revendications 1 à 7, comprenant en outre un ou plusieurs additifs sélectionnés parmi un modificateur de rhéologie, un adjuvant de réduction d'eau, un agent retardateur, un agent accélérateur et un agent d'entraînement d'air.

9. Composition pour la production de béton armé au sulfoaluminate de calcium (CSA) selon la revendication 8, dans laquelle lesdits un ou plusieurs additifs sont présents dans une quantité totale de 0,1 à 2 %, de préférence de 0,2 à 1,5 % en poids, encore plus préférentiellement de 0,5 à 1,0 % en poids par rapport à la quantité de ciment de CSA.

10. Composition pour la production de béton armé au sulfoaluminate de calcium (CSA) selon l'une quelconque des revendications 8 à 9, dans laquelle ledit agent retardateur est l'acide citrique, l'acide tartrique ou les mélanges de ceux-ci.

11. Composition pour la production de béton armé au sulfoaluminate de calcium (CSA) selon l'une quelconque des revendications 8 à 10, dans laquelle ledit agent accélérateur est le carbonate de lithium, le carbonate de sodium ou les mélanges de ceux-ci.

12. Composition pour la production de béton armé au sulfoaluminate de calcium (CSA) selon l'une quelconque des revendications 8 à 11, dans laquelle ledit agent de réduction d'eau est un polymère à base de polycarboxylate.

13. Composition pour la production de béton armé au sulfoaluminate de calcium (CSA) selon l'une quelconque des revendications 1 à 12, dans laquelle la quantité de ciment de CSA est dans la plage de 20 kg à 800 kg, de préférence de 75 kg à 600 kg, plus préférentiellement de 100 kg à 500 kg par mètre cube (m³) de béton final.

14. Composition pour la production de béton armé au sulfoaluminate de calcium (CSA) selon l'une quelconque des revendications 1 à 13, comprenant en outre de l'eau dans un rapport en poids eau/ciment entre 0,20 et 0,80, de préférence de 0,35 à 0,65, plus préférentiellement de 0,45 à 0,55.

15. Béton armé apte à être obtenu en utilisant une composition selon l'une quelconque des revendications 1 à 14.

16. Utilisation d'un sel de passivation sélectionné parmi un nitrite d'un métal alcalin ou alcalino-terreux, un nitrate d'un métal alcalin ou alcalino-terreux et les mélanges de ceux-ci pour l'inhibition de la corrosion d'un béton armé à base de CSA.

17. Procédé pour la production d'un béton armé à base de CSA, dans lequel un sel de passivation sélectionné parmi un nitrite d'un métal alcalin ou alcalino-terreux, un nitrate d'un métal alcalin ou alcalino-terreux et les mélanges de ceux-ci est utilisé, ledit sel de passivation étant employé sous la forme d'une solution aqueuse dans une quantité entre 5 et 30 L par m³ de béton final, et dans lequel la concentration de l'anion dudit agent de passivation est dans la plage de 15 à 500 mol pour 1 mètre cube de béton.
